# EUROPÄISCHE PATENTSCHRIFT

(11) **EP 2 026 986 B1**
(45) Veröffentlichungstag und Bekanntmachung des Hinweises auf die Patenterteilung: **06.01.2016**
(21) Anmeldenummer: 07725294.8
(22) Anmeldetag: 16.05.2007
(51) Int. Cl.: B60C 19/00

(54) **ANORDNUNG AN EINEM FAHRZEUGRAD ZUR ABSORPTION VON SCHALL**
DEVICE ON THE WHEEL OF A VEHICLE FOR THE ABSORPTION OF SOUND
DISPOSITIF SUR UNE ROUE DE VÉHICULE DESTINÉ À L'ABSORPTION DU BRUIT

(30) Priorität: 23.05.2006 DE 102006024059
(43) Veröffentlichungstag der Anmeldung: 25.02.2009
(73) Patentinhaber: Volkswagen Aktiengesellschaft, 38440 Wolfsburg (DE)
(72) Erfinder: ROTHE, Andreas, 38440 Wolfsburg (DE); BRAUSE, Martin, 38300 Wolfenbüttel (DE); SELLSCHOPP, Jürgen, 38120 Braunschweig (DE)
(86) Internationale Anmeldenummer: PCT/EP2007/004379
(87) Internationale Veröffentlichungsnummer: WO 2007/134780

(56) Entgegenhaltungen:
- EP-A- 1 099 572
- EP-A2- 1 110 763
- WO-A-00/53438
- JP-A- 7 052 616
- JP-A- 2001 347 807
- US-B1- 6 343 843

## Beschreibung

Die Erfindung betrifft eine Anordnung an einem Fahrzeugrad zur Absorption von Schall innerhalb eines zwischen einer Felge und einem auf diese aufgezogenen Reifen gebildeten Hohlraumes, wobei im besagten Hohlraum schallabsorbierendes Material eingebracht ist.

Seit geraumer Zeit ist es bekannt, mittels innerhalb des Reifentorus eines Fahrzeugrades angeordneten schallabsorbierenden Materials die Schallabstrahlung des Fahrzeugrades zu mindern.

So werden mit der DE 29 46 273 C2 schallabsorbierende, offenporige Bauteile vorgeschlagen, die ihrerseits an der Felge angeordnet sind und von dort ohne Kontakt mit der Reifeninnenfläche in den zwischen Felge und Reifen gebildeten Hohlraum hineinragen. Die schallabsorbierenden Bauteile können durch umlaufende Dämpfungsbänder, durch mit Dämpfungsmaterial oder Dämpfungselementen belegte elastische Seitenscheiben oder perforierte Gehäuse mit eingeschlossenem Dämpfungsmaterial gebildet sein. Als Dämpfungsmaterialien werden Kunststoff, Stahlwolle oder Textilien empfohlen.

Die Druckschriften EP 1 099 572 A2, DE 198 19 128 C2, DE 198 20 590 A1 und DE 199 26 039 A1 offenbaren des Weiteren auf der Felge umlaufende ringförmige Absorber aus beispielsweise offenporigem Schaumstoff, Filz, Watte oder anderen Materialien ähnlicher Struktur und ähnlichen Aufbaus, die ihrerseits mittels Fäden oder durch Klebung an der Felge festgelegt sind, um nicht durch Fliehkräfte verformt zu werden und um die Rundlaufeigenschaften des Reifens nicht zu beeinträchtigen.

Weiter ist aus der JP 6106903 A ein Absorber, bestehend zum einen aus einem Riementeil aus Metall, synthetischem Harz, Gewebe, synthetischem Papier, Klebeband etc. und zum anderen aus einem schallabsorbierenden Schaumstoff bekannt.

Schließlich ist aus der EP 1 184 207 A2 ein Geräuschreduzierungssystem an Reifen mit einem schallabsorbierenden Schaumstoff bekannt, welches lose um die Felge geschlungen ist. Zudem zeigt die JP 2001 347807 A ein schallabsorbierenden Stoff, der abschnittweise lose an der Felge gelagert ist und durch die Rotationskräfte im rollenden Reifen ausgerichtet wird.

Die WO 00/53438 A und US 6 343 843 B1 offenbaren ein Anordnung für ein Fahrzeugrad der gattungsgemäßen Art mit einem luftschallabsorbierenden Fasermaterial, welches an der Außenseite der Felge angeordnet ist. Das Fasermaterial ist an einer Trägerschicht befestigt, die an der Felge gehalten wird, und von der die Fasern abstehen.

Aufgabe der Erfindung ist es, eine hochwirksame Anordnung an einem Fahrzeugrad zur Absorption von Schall innerhalb eines zwischen einer Felge und einem auf diese aufgezogenen Reifen gebildeten Hohlraumes zu schaffen, welche obendrein einfach zu bewerkstelligen sowie kostengünstig ist.

Ausgehend von einer Anordnung an einem Fahrzeugrad zur Absorption von Schall innerhalb eines zwischen einer Felge und einem auf diese aufgezogenen Reifen gebildeten Hohlraumes, wobei im besagten Hohlraum schallabsorbierendes Material eingebracht ist, wird die Aufgabe dadurch gelöst, dass das schallabsorbierende Material durch eine Vielzahl von flexiblen Fäden und/oder Fasern gebildet ist und Fäden und/oder Fasern einerends indirekt, an einem sich in Grenzen frei im Hohlraum bewegenden flexiblen Tragelement und/oder über ein weitestgehend starres, an der Felge festgelegtes Tragelement, abgestützt und anderenends derart frei beweglich ausgebildet sind, dass dieselben sich wenigstens bei Drehung des Fahrzeugrades infolge der wirkenden Radial- respektive Fliehkräfte in den Hohlraum des Fahrzeugrades hinein ausrichten.

Was das flexible Tragelement anbelangt, kann gemäß einer ersten vorteilhaften Ausgestaltungsvariante dasselbe durch ein ringförmiges und um die Felge gelegtes Tragband gebildet sein, wobei zweckmäßigerweise das ringförmige Tragband einen Durchmesser aufweist, der kleiner als der Durchmesser der Felgenhörner der Felge ist. Des Weiteren kann das flexible Tragelement gemäß einer zweiten vorteilhaften Ausgestaltungsvariante auch durch ein sich einerends direkt oder indirekt an der Felge abstützendes und anderenends frei bewegliches Tragband gebildet sein.

Im Hinblick auf ein weitestgehend starres Tragelement ist vorgesehen, dass dieses durch ein fest an der Felge angeordnetes Montageteil, wie ein Ventil, einen Reifendrucksensor o. a. gebildet ist. Weiter wird vorgeschlagen, dass Fäden, Fasern und/oder ein oder mehrere sich einerends abstützende und anderenends frei bewegliche und mit Fäden und/oder Fasern bestückte flexible Tragelemente in Form von Tragbändern über ein in den Hohlraum des Fahrzeugrades hineinreichendes, weitestgehend starres Halteelement, an dem mit der Felge fest verbundenen, weitestgehend starren Tragelement befestigt oder von dem Tragelement an der Felge fixiert sind. In Ausgestaltung der Erfindung wird ferner vorgeschlagen, dass das Tragelement in Form des Tragbandes zwar flexibel, jedoch dehnungsfest ausgebildet ist. Dabei ist es vorteilhaft, wenn das Tragband durch ein Gewebeband ausgebildet ist und/oder in einer Tragschicht des Tragbandes zugfeste Drähte, Fasern, Faserbündel oder -stränge vorgesehen sind. Wie die Erfindung schließlich noch vorsieht, können die der Schallabsorption dienenden Fäden und/oder Fasern durch Kunst- und/oder Naturfasern gebildet sein.

Für eine automatisierte Montage einer erfindungsgemäßen schallabsorbierenden Anordnung, bei der das das schallabsorbierende Material tragende Tragelement durch ein ringförmiges Tragband ausgebildet ist, ist es von Vorteil, wenn das Tragband einen elastischen Anteil und einen dehnungsfesten Anteil aufweist. Durch die Integration des elastischen Anteils, vorzugsweise eines elastischen Materials, in ein ringförmiges Tragband bzw. Tragelement kann während des Montageprozesses der wirksame Durchmesser des ringförmigen Tragbands verkleinert werden, so dass die anschließende Montage des Reifens auf die Felge vereinfacht wird und das Befüllen des Rades mit Luft prozesssicher auf automatisierte Weise erfolgen kann. Vor der Montage des Reifens wird zunächst das ringförmige Tragelement mit seinem schallabsorbierenden Material im Bereich des Tiefbetts der Felge auf der Felge angeordnet, wobei beispielsweise durch eine Überlappung des ringförmigen Tragelements aufgrund des elastischen Anteils des Tragbandes eine Reduzierung des Durchmessers des Tragelements erzielt wird. Bei der anschließenden Montage des Reifens kann der Reifen über die schallabsorbierende ringförmige Anordnung streifen, ohne diese in ihrer Lage derart zu verändern, dass es beispielsweise zu einem zumindest partiellen Einklemmen von Tragelement und/oder schallabsorbierendem Material zwischen Felge und Reifen kommen kann. Eine weitere Montagevariante besteht darin, dass eine Reifenseitenwand auf der Felge montiert wird und dann das Tragelement mit dem schallabsorbierenden Material auf das Felgenbett der Felge aufgelegt und positioniert wird. Anschließend erfolgt die Montage der zweiten Reifenseitenwand.

Für eine einfache und kostengünstige Ausbildung eines solchen das Tragelement bildenden Tragbandes ist es vorteilhaft, wenn der elastische Anteil und der dehnungsfeste Anteil des Tragbandes sandwichartig übereinander liegend angeordnet und gegebenenfalls miteinander verklebt sind. Vorteilhafterweise kann der elastische Anteil des Tragbandes durch eine elastische Schicht, beispielsweise eine Schicht aus einem gummielastischen Werkstoff ausgebildet sein.

Aus dem gleichen Grund ist es ebenfalls von Vorteil, wenn das Tragband einen durch erste Fäden und/oder Fasern gebildeten elastischen Anteil und einen durch zweite Fäden und/oder Fasern gebildeten dehnungsfesten Anteil aufweist. Dabei ist es besonders vorteilhaft, wenn die ersten Fäden und/oder Fasern des elastischen Anteils und die zweiten Fäden und/oder Fasern des dehnungsfesten Anteils des Tragbandes zu einem Gewebeband miteinander verwoben sind. Unter dem Begriff Fasern sind hier auch Faserbündel oder -stränge zu verstehen.

Die Erfindung wird nachstehend anhand der in den Zeichnungen schematisch dargestellten Ausführungsbeispiele näher erläutert. Es zeigen:
- Fig. 1: einen Radialschnitt durch ein Fahrzeugrad mit einer erfindungsgemäßen Anordnung zur Absorption von Schall gemäß einer ersten Ausgestaltungsvariante,
- Fig. 2: den Schnitt I-I nach Fig. 1 bei stehendem Fahrzeugrad,
- Fig. 3: den Schnitt I-I nach Fig. 1 bei drehendem Fahrzeugrad,
- Fig. 4: einen Radialschnitt durch ein Fahrzeugrad mit einer erfindungsgemäßen Anordnung zur Absorption von Schall gemäß einer zweiten Ausgestaltungsvariante,
- Fig. 5: einen Radialschnitt durch ein Fahrzeugrad mit einer erfindungsgemäßen Anordnung zur Absorption von Schall gemäß einer dritten Ausgestaltungsvariante,
- Fig. 6: eine graphische Darstellung von Messwerten des Schalldruckpegels über der Frequenz für ein Fahrzeugrad im Ausrollvorgang 80-20 km/h Fahrtgeschwindigkeit, welches erfindungsgemäß ausgestattet ist, im Vergleich mit Messwerten für ein nicht erfindungsgemäß ausgestattetes Fahrzeugrad,
- Fig. 7: eine graphische Darstellung von Messwerten des Schalldruckpegels über der Frequenz für ein Fahrzeugrad bei konstant 100 km/h Fahrtgeschwindigkeit, welches erfindungsgemäß ausgestattet ist, im Vergleich mit Messwerten für ein nicht erfindungsgemäß ausgestattetes Fahrzeugrad,
- Fig. 8: einen Radialschnitt durch ein Fahrzeugrad mit einer erfindungsgemäßen Anordnung zur Absorption von Schall gemäß einer vierten Ausgestaltungsvariante, und
- Fig. 9: eine Prinzipdarstellung einer erfindungsgemäßen ringförmigen Absorptionsanordnung in zwei Zuständen.

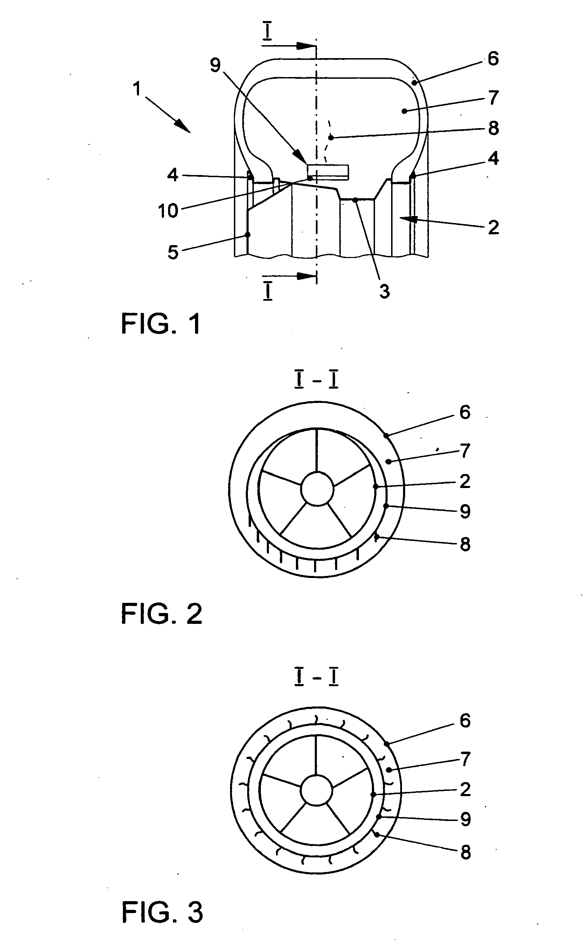

Fig. 1 zeigt ein an sich bekanntes Fahrzeugrad 1, welches durch eine Felge 2 mit einem Felgenbett 3, mit Felgenhörnern 4 und mit einer Radscheibe 5, sowie durch einen auf die Felge 2 aufgezogenen Reifen 6 gebildet ist.

Um vom Fahrzeugrad 1 respektive vom "System Felge 2 - Reifen 6" ausgehende störende Geräusche, die ihrerseits insbesondere aus der Torusresonanz im zwischen Felge 2 und Reifen 6 gebildeten Hohlraum 7 resultieren, zu minimieren, ist im besagten Hohlraum 7 schallabsorbierendes Material eingebracht.

Das schallabsorbierende Material ist durch eine Vielzahl von flexiblen Fäden und/oder Fasern 8 gebildet, die ihrerseits sowohl durch Natur- als auch durch Kunstfasern, wie Mineral- oder Polymerfasern gebildet sein können und sich zum einen einzeln oder auch im Bündel einerends direkt an der Felge 2, beispielsweise durch Klebung abstützen und anderenends derart frei beweglich ausgebildet sind, dass dieselben sich wenigstens bei Drehung des Fahrzeugrades 1 infolge der Radial- respektive Fliehkräfte in den Hohlraum 7 des Fahrzeugrades hinein ausrichten (nicht näher gezeigt).

Zum anderen hat es sich als besonders vorteilhaft erwiesen, die Fäden und/oder Fasern 8 an einem gemeinsamen flexiblen oder starren Tragelement festzulegen, welches sich seinerseits an der Felge 2 abstützen kann, wodurch Montageerleichterungen ermöglicht werden.

So ist beispielsweise, wie in den Fig. 1 bis 3 gezeigt, ein sich in Grenzen frei im Hohlraum 7 bewegendes flexibles Tragelement in Form eines ringförmigen und um die Felge 2 gelegten Tragbandes 9 vorgesehen, welches einen Durchmesser aufweist, der kleiner als der Durchmesser der Felgenhörner 4 ist, um eine etwaige Berührung desselben mit dem Reifen 6 und daraus resultierende nachteilige Geräuschentwicklungen sowie Verschleiß am Reifen 6 und am Tragband 9 zu vermeiden.

Es ist somit eine Relativbewegung zwischen Felge 2 und Tragband 9 gestattet, indem auf eine mechanische bzw. Reibschlussverbindung mit der Felge 2 ausdrücklich verzichtet wird (Fig. 2). Kostenintensives Spezialwerkzeug zur Montage bzw. Demontage des Tragbandes 9 ist somit entbehrlich.

Durch die Drehung des Fahrzeugrades 1 und des ringförmigen Tragbandes 9 um die Radachse mit den daran einerends beispielsweise durch Klebung oder auch durch Verweben festgelegten Fäden und/oder Fasern 8 und demgemäß durch die einwirkenden Fliehkräfte organisiert sich das Tragband 9 selbst um das Felgenbett 3 der Felge 2. Des Weiteren ist eine radiale Ausrichtung der freien Enden der Fäden und/oder Fasern 8 in den Hohlraum 7 bzw. Torusraum hinein zu verzeichnen, welches in vorteilhafter Weise zu der gewünschten Absorption des Luftschalles innerhalb des Hohlraumes 7 führt, d. h., die unerwünschte Hohlraumresonanz kann sich nicht wie herkömmlich ausbilden (Fig. 3).

Aufgrund der Tatsache, dass das ringförmige Tragband 9 bei drehendem Fahrzeugrad 1 weitestgehend frei über dem Felgenbett 3 schwebt, sind ferner zusätzliche Unwuchtbeiträge vorteilhaft vermieden.

Um durch erhöhte Fliehkräfte eine Dehnung des flexiblen Tragbandes 9 zu unterbinden, ist dasselbe dehnungsfest ausgebildet. Dazu kann eine geeignete Tragschicht 10 vorgesehen sein, die ihrerseits beispielsweise nicht näher gezeigte, in Umfangsrichtung weisende Drahteinlagen, Mineralfasern oder andere Fasern, Faserbündel oder -stränge aufweist. Alternativ ist es ebenfalls möglich, dass Tragband 9 als Gewebeband aus zugfesten Fäden oder Fasern auszubilden.

Gemäß eines hier nicht näher gezeigten weiteren Ausführungsbeispieles kann es auch angezeigt sein, ein oder mehrere langgestreckte Tragelemente in Form von Tragbändern 9 des vorbeschriebenen Aufbaues mit anhaftenden Fäden und/oder Fasern 8 vorzusehen, die sich ihrerseits einerends direkt beispielsweise durch Klebung an der Felge 2 abstützen und anderenends frei beweglich ausgebildet sind und bei Drehung des Fahrzeugrades 1 sich in den Hohlraum 7 hinein ausrichten.

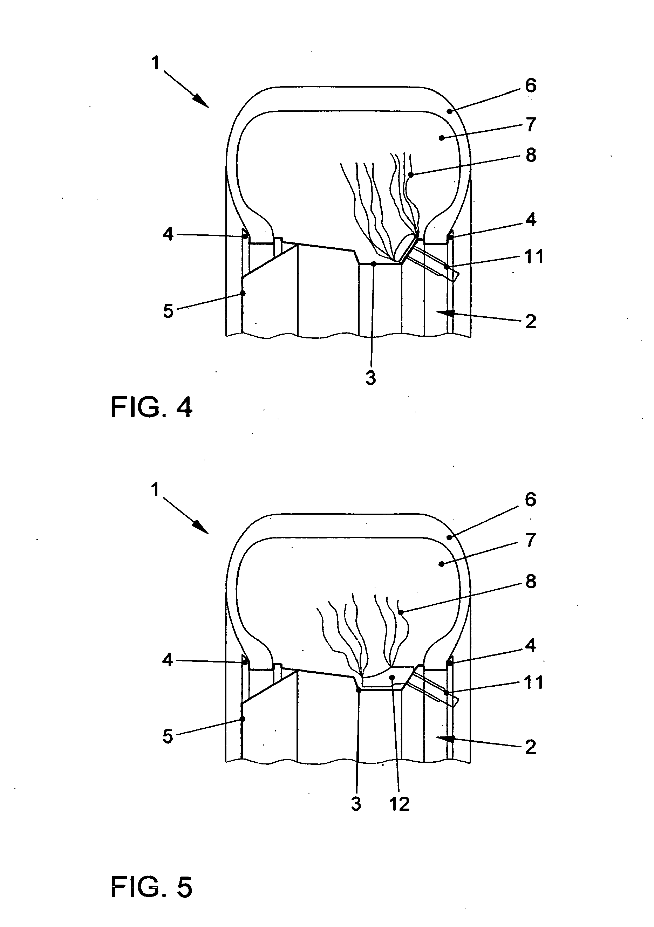

Die Fig. 4 zeigt Fäden und/oder Fasern 8, die ihrerseits direkt an einem weitestgehend starren Tragelement, hier einem Ventil 11 festgelegt oder vermittels dessen an der Felge 2 fixiert sind, wodurch eine einfache und kostengünstige Montage derselben gegeben ist.

Demgegenüber können auch ein oder mehrere mit Fäden und/oder Fasern 8 versehene langgestreckte Tragelemente in Form besagter Tragbänder 9 der vorbeschriebenen Art am Ventil 11 direkt festgelegt oder vermittels dessen an der Felge 2 fixiert sein.

Fernerhin kann statt besagtem Ventil 11 auch ein an sich bekannter und demgemäß nicht näher gezeigter Reifendrucksensor oder jegliches andere an der Felge 2 angeordnete Montageteil zur Aufnahme von Fäden und/oder Fasern 8 und/oder Tragbändern 9 bzw. zur Festlegung derselben an der Felge 2 Verwendung finden.

Gemäß Fig. 5 kann schließlich auch ein weitestgehend starres Halteelement 12 vorgesehen sein, an welchem sich vorliegend Fäden und/oder Fasern 8 abstützen. Das Halteelement 12 ist seinerseits mit dem Ventil 11 fest verbunden, beispielsweise einstückig mit demselben ausgebildet, oder vermittels desselben an der Felge 2 fixiert. Vorliegend reicht das Halteelement 12 axial in den Hohlraum 7 hinein, wodurch eine verbesserte radiale Ausrichtung der Fäden und/oder Fasern 8 gestattet ist.

Auch hier können statt einzelner Fäden und/oder Fasern 8 oder Bündeln derselben mit Fäden und/oder Fasern 8 bestückte langgestreckte Tragbänder 9 zur Anwendung kommen, die sich einerends am Ventil 11 und/oder an dem Halteelement 12 abstützen und anderenends frei beweglich ausgebildet sind (nicht näher dargestellt).

Wie bereits oben beschrieben, ist durch die Fäden und/oder Fasern 8 eine wirkungsvolle Absorption von störenden Geräuschen, die ihrerseits insbesondere aus der Torusresonanz im zwischen Felge 2 und Reifen 6 gebildeten Hohlraum 7 resultieren, zu verzeichnen.

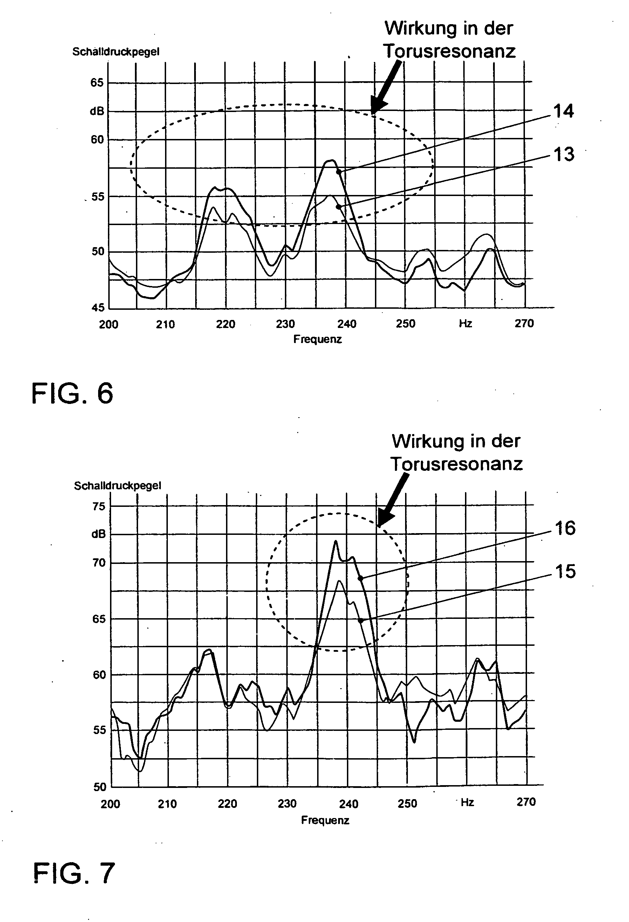

Fig. 6 zeigt eine graphische Darstellung von Messwerten des Schalldruckpegels über der Frequenz für ein Fahrzeugrad 1 im Ausrollvorgang 80-20 km/h Fahrtgeschwindigkeit, welches erfindungsgemäß ausgestattet ist (Kurvenverlauf 13), im Vergleich mit Messwerten für ein nicht erfindungsgemäß ausgestattetes Fahrzeugrad 1 (Kurvenverlauf 14).

Danach ist die vorteilhafte Wirkung der Fäden und/oder Fasern 8 bzw. der mit denselben behafteten Tragbänder 9, welche als Torusabsorber fungieren, im gekennzeichneten Torusresonanzbereich zwischen 210-250 Hz durch eine maßgebliche Minderung des Schalldruckpegels festzustellen.

Vergleichbares ist der graphischen Darstellung von Messwerten des Schalldruckpegels über der Frequenz für ein Fahrzeugrad 1 bei konstant 100 km/h Fahrtgeschwindigkeit, welches erfindungsgemäß ausgestattet ist (Kurvenverlauf 15), im Vergleich mit Messwerten für ein nicht erfindungsgemäß ausgestattetes Fahrzeugrad 1 (Kurvenverlauf 16) gemäß Fig. 7 zu entnehmen.

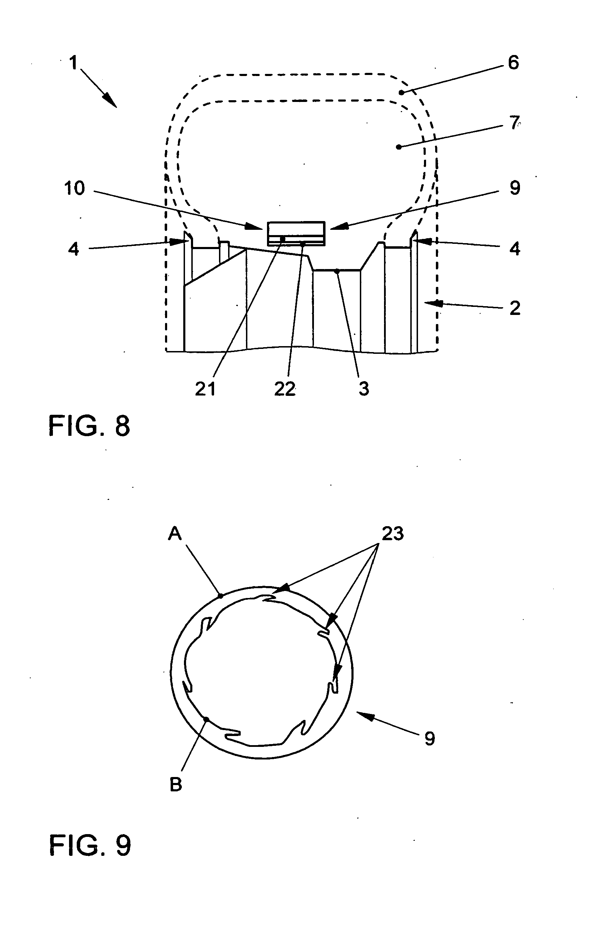

In Fig. 8 ist ein Radialschnitt durch ein Fahrzeugrad mit einer erfindungsgemäßen ringförmigen Anordnung zur Absorption von Schall gemäß einer vierten Ausgestaltungsvariante dargestellt. Diese Ausgestaltungsvariante unterscheidet sich von der in der Fig. 1 dargestellten ersten Ausführungsvariante im Wesentlichen lediglich dadurch, dass das ringförmige, als flexibles Tragelement dienende Tragband 9 , das zur Befestigung eines schallabsorbierenden Flores oder eines anderen schallabsorbierenden Materials dient, einen elastischen Anteil 21 und einen dehnungsfesten Anteil 22 aufweist. Wie in der Fig. 8 beispielhaft dargestellt ist, können der elastische Anteil 21 und der dehnungsfeste Anteil 22 des ringförmigen Tragbandes 9 sandwichartig übereinander liegend angeordnet sein, wobei dann dem dehnungsfesten Anteil 22 die Funktion des Sicherstellens einer ausreichenden Dehnungsfestigkeit der Tragschicht 10 zukommt.

Das das flexible Tragelement bildende ringförmige Tragband 9 kann einen durch erste Fäden und/oder Fasern gebildeten elastischen Anteil 21 und einen durch zweite Fäden und/oder Fasern gebildeten dehnungsfesten Anteil 22 aufweisen. Unter dem Begriff Fasern sind hier auch Faserbündel oder -stränge zu verstehen. In diesem Fall können für das Tragband 9 beispielsweise zumindest eine Lage von ersten Fäden des elastischen Anteils 21, die miteinander verwoben sein können, sowie zumindest eine weitere Lage von zweiten Fäden des dehnungsfesten Anteils 22, die ebenfalls miteinander verwoben sein können, verwendet und auf diese Weise ein sandwichartiger Aufbau des Tragbandes 9 ausgebildet sein. Die einzelnen Lagen können beispielsweise miteinander verklebt sein. Alternativ ist es ebenfalls möglich, die ersten Fäden und/oder Fasern des elastischen Anteils 21 und die zweiten Fäden und/oder Fasern des dehnungsfesten Anteils 22 des Tragbandes 9 zu einem Gewebeband miteinander zu verweben.

Der elastische Anteil 21 kann, insbesondere wenn er aus Fäden oder anderen strangförmigen Elementen gebildet wird, aus einem vorzugsweise elastischen oder zumindest leicht dehnbaren metallischen oder polymeren Werkstoff bestehen. Der dehnungsfeste Anteil 22 kann, insbesondere wenn er aus Fäden oder anderen strangförmigen Elementen gebildet wird, aus einem hochzugfesten metallischen oder polymeren Werkstoff bestehen. Dabei ist es auch möglich, gegebenenfalls entsprechende Überlängen in dem elastischen Anteil 21 und/oder dem dehnungsfesten Anteil 22 vorzusehen.

Ebenfalls möglich ist es, dass der elastische Anteil 21 des Tragbandes 9 durch eine elastische Schicht beispielsweise aus einem gummielastischen Werkstoff ausgebildet ist, in die zur Bildung einer Tragschicht 10 die Fäden, Fasern, Faserbündel oder -stränge des dehnungsfesten Anteils 22 eingebettet sein können oder die selbst eine Schicht eines sandwichartigen Aufbaus des Tragbandes 9 bildet.

Vor der Reifenmontage wird die erfindungsgemäße ringförmige Anordnung zur Absorption von Schall, also das das schallabsorbierende Material tragende ringförmige Tragband 9, auf die Felge 2 vorzugsweise im Bereich ihres Felgenbetts 3 gezogen und an einer oder mehreren Stellen im Felgenbett 3 umgelegt, so dass sich eine Überlappung 23 oder mehrere Überlappungen 23 ergeben, wie dies in der Fig. 9 dargestellt ist. Die Fig. 9 zeigt eine vereinfachte Prinzipdarstellung einer erfindungsgemäßen ringförmigen Absorptionsanordnung in zwei Zuständen. Der mit A bezeichnete Zustand stellt den Ausgangszustand und den Betriebszustand dar, während der mit B bezeichnete Zustand den verkürzten Zustand der ringförmigen Absorptionsanordnung mit einem durch mehrere Überlappungen 23 gekennzeichneten verringerten Durchmesser zum Zwecke der leichteren und sicheren Reifenmontage zeigt.

Durch die Überlappungen 23 des das schallabsorbierende Material, also die Fäden und/oder Fasern tragenden Tragbandes 9 kann bei der Montage des Reifens 6 der Reifen 6 das Tragelement mit dem schallabsorbierenden Material überstreichen, ohne das Tragelement so in seiner Position auf der Felge 2 zu verändern, dass die Gefahr des Einklemmens des Tragbandes 9 oder des schallabsorbierenden Materials zwischen dem Reifen und insbesondere den Felgenhörnern 4 der Felge 2 besteht.

Durch die Rotation des Fahrzeugrades 1 im Betrieb des Fahrzeuges und die dabei wirksamen Kräfte längt sich der elastische Anteil 21 des Tragbandes 9 der ringförmigen Absorptionsanordnung bis zum Erreichen der Länge des dehnungsfesten Anteils 22. Damit füllen die auf oder an dem Tragband 9 vorgesehenen Fäden und/oder Fasern den Torusraum zwischen dem Felgenbett 3 und dem Reifen 6 aus, ohne eine mechanische Verbindung zur Felge 2 oder zum Reifen 6 zu haben.

Vorstehende Ausführungsbeispiele stellen jeweils auf eine bestimmte Ausgestaltungsvariante eines Torusabsorbers ab. Selbstverständlich können die vorbeschriebenen Ausgestaltungsvarianten auch in beliebiger Kombination innerhalb eines Fahrzeugrad 1 Verwendung finden.

### Bezugszeichenliste

- 1: Fahrzeugrad
- 2: Felge
- 3: Felgenbett
- 4: Felgenhorn
- 5: Radscheibe
- 6: Reifen
- 7: Hohlraum
- 8: Fäden und/oder Fasern
- 9: Tragband
- 10: Tragschicht
- 11: Ventil
- 12: Halteelement
- 13: Kurvenverlauf (mit Torusabsorber)
- 14: Kurvenverlauf (ohne Torusabsorber)
- 15: Kurvenverlauf (mit Torusabsorber)
- 16: Kurvenverlauf (ohne Torusabsorber)
- 21: elastischer Anteil
- 22: dehnungsfester Anteil
- 23: Überlappung

## Patentansprüche

1. Anordnung an einem Fahrzeugrad (1) zur Absorption von Schall innerhalb eines zwischen einer Felge (2) und einem auf diese aufgezogenen Reifen (6) gebildeten Hohlraumes (7), wobei im besagten Hohlraum (7) schallabsorbierendes Material eingebracht ist, welches durch eine Vielzahl von flexiblen Fäden und/oder Fasern (8) gebildet ist, die einerends derart frei beweglich ausgebildet sind, dass dieselben sich wenigstens bei Drehung des Fahrzeugrades (1) infolge der wirkenden Radial- respektive Fliehkräfte in den Hohlraum (7) des Fahrzeugrades (1) hinein ausrichten **dadurch gekennzeichnet, dass** die Fäden und/oder Fasern (8) anderenends indirekt an einem sich in Grenzen frei im Hohlraum (7) bewegenden flexiblen Tragelement abgestützt sind und/oder direkt an einem weitestgehend starren, an der Felge (2) festgelegten Tragelement, das durch ein fest an der Felge (2) angeordnetes Montageteil, wie ein Ventil (11), ein Reifendrucksensor o. a. gebildet ist, aufgenommen und festgelegt sind.

2. Anordnung nach Anspruch 1, **dadurch gekennzeichnet, dass** das flexible Tragelement durch ein ringförmiges und um die Felge (2) gelegtes Tragband (9) gebildet ist.

3. Anordnung nach Anspruch 2, **dadurch gekennzeichnet, dass** das ringförmige Tragband (9) einen Durchmesser aufweist, der kleiner dem Durchmesser der Felgenhörner (4) der Felge (2) ist.

4. Anordnung nach Anspruch 1, **dadurch gekennzeichnet, dass** das flexible Tragelement durch ein einerends direkt oder indirekt an der Felge sich abstützendes und anderenends frei bewegliches Tragband (9) gebildet ist.

5. Anordnung nach einem der Ansprüche 1 bis 4, **dadurch gekennzeichnet, dass** Fäden, Fasern (8) und/oder ein oder mehrere sich einerends abstützende und anderenends frei bewegliche und mit Fäden und/oder Fasern (8) bestückte flexible Tragelemente in Form von Tragbändern (9) über ein in den Hohlraum (7) des Fahrzeugrades (1) hineinreichendes, weitestgehend starres Halteelement (12), an dem mit der Felge (2) fest verbundenen, weitestgehend starren Tragelement befestigt oder von dem Tragelement an der Felge (2) fixiert sind.

6. Anordnung nach einem der Ansprüche 2 bis 5, **dadurch gekennzeichnet, dass** das Tragelement in Form des Tragbandes (9) zwar flexibel, jedoch dehnungsfest ausgebildet ist.

7. Anordnung nach einem der Ansprüche 2 bis 6, **dadurch gekennzeichnet, dass** das das Tragelement bildende Tragband (9) als Gewebeband ausgebildet ist.

8. Anordnung nach einem der Ansprüche 1 bis 8, **dadurch gekennzeichnet, dass** die Fäden und/oder Fasern (8) durch Kunst- und/oder Naturfasern gebildet sind.

9. Anordnung nach einem der Ansprüche 2 bis 8, **dadurch gekennzeichnet, dass** das als Tragelement dienende ringförmige Tragband (9) einen elastischen Anteil (21) und einen dehnungsfesten Anteil (22) aufweist.

10. Anordnung nach Anspruch 9, **dadurch gekennzeichnet, dass** der elastische Anteil (21) und der dehnungsfeste Anteil (22) des Tragbandes (9) sandwichartig übereinander liegend angeordnet sind.

11. Anordnung nach Anspruch 9 oder 10, **dadurch gekennzeichnet, dass** das Tragband (9) einen durch erste Fäden und/oder Fasern gebildeten elastischen Anteil (21) und einen durch zweite Fäden und/oder Fasern gebildeten dehnungsfesten Anteil (22) aufweist.

12. Anordnung nach Anspruch 11, **dadurch gekennzeichnet, dass** die ersten Fäden und/oder Fasern des elastischen Anteils (21) und die zweiten Fäden und/oder Fasern des dehnungsfesten Anteils (22) des Tragbandes (9) miteinander verwoben sind.

13. Anordnung nach Anspruch 9 oder 10, **dadurch gekennzeichnet, dass** der elastische Anteil (21) des Tragbandes (9) durch eine elastische Schicht ausgebildet ist.

## Claims

1. Device on the wheel of a vehicle (1) for the absorption of sound within a cavity (7) formed between a rim (2) and a tyre (6) fitted on the rim, wherein said cavity (7) contains sound-absorbent material formed by a multitude of flexible filaments and/or fibres (8), which at one end are formed freely movably in such a way that, at least during rotation of the vehicle wheel (1), the said filaments and/or fibres align themselves into the cavity (7) of the vehicle wheel (1) as a result of the radial or centrifugal forces respectively acting, **characterized in that** at the other end the filaments and/or fibres (8) are supported indirectly on a flexible supporting element moving freely within limits in the cavity (7) and/or are accommodated and fixed directly on a largely rigid supporting element, which is fixed to the rim (2) and is formed by a mounted part arranged fixedly on the rim (2), such as a valve (11), a tyre pressure sensor or the like.

2. Device according to Claim 1, **characterized in that** the flexible supporting element is formed by a supporting band (9) that is in the form of a ring and is placed around the rim (2).

3. Device according to Claim 2, **characterized in that** the supporting band (9) in the form of a ring has a diameter that is smaller than the diameter of the rim flanges (4) of the rim (2).

4. Device according to Claim 1, **characterized in that** the flexible supporting element is formed by a supporting band (9) which at one end is supported directly or indirectly on the rim and at the other end is freely movable.

5. Device according to one of Claims 1 to 4, **characterized in that** filaments, fibres (8) and/or one or more flexible supporting elements in the form of supporting bands (9) that are supported at one end and are freely movable at the other end and are provided with filaments and/or fibres (8) are fastened by way of a largely rigid holding element (12), reaching into the cavity (7) of the vehicle wheel (1), on the largely rigid supporting element fixedly connected to the rim (2) or are fixed by the supporting element on the rim (2).

6. Device according to one of Claims 2 to 5, **characterized in that** the supporting element in the form of the supporting band (9) is formed so as to be flexible but resistant to extension under strain.

7. Device according to one of Claims 2 to 6, **characterized in that** the supporting band (9) forming the supporting element is formed as a band of woven fabric.

8. Device according to one of Claims 1 to 8, **characterized in that** the filaments and/or fibres (8) are formed by synthetic and/or natural fibres.

9. Device according to one of Claims 2 to 8, **characterized in that** the supporting band (9) in the form of a ring that serves as a supporting element has an elastic component (21) and an extension-resistant component (22).

10. Device according to Claim 9, **characterized in that** the elastic component (21) and the extension-resistant component (22) of the supporting band (9) are arranged one on top of the other in a sandwich-like manner.

11. Device according to Claim 9 or 10, **characterized in that** the supporting band (9) has an elastic component (21) formed by first filaments and/or fibres and an extension-resistant component (22) formed by second filaments and/or fibres.

12. Device according to Claim 11, **characterized in that** the first filaments and/or fibres of the elastic component (21) and the second filaments and/or fibres of the extension-resistant component (22) of the supporting band (9) are interwoven with one another.

13. Device according to Claim 9 or 10, **characterized in that** the elastic component (21) of the supporting band (9) is formed by an elastic layer.

## Revendications

1. Agencement au niveau d'une roue de véhicule (1) pour absorber le son à l'intérieur d'une cavité (7) formée entre une jante (2) et un pneu (6) tendu sur celle-ci, un matériau absorbant le son étant introduit dans ladite cavité (7), lequel est constitué par une pluralité de fils et/ou de fibres flexibles (8) réalisés à une extrémité de manière librement mobile de telle sorte que, lors de la rotation de la roue de véhicule (1), les fils et/ou fibres s'orientent vers l'intérieur dans la cavité (7) de la roue de véhicule (1) du fait des forces radiales, respectivement centrifuges, qui s'exerçent, **caractérisé en ce que** les fils et/ou les fibres (8) sont supportés à l'autre extrémité indirectement au niveau d'un élément de support flexible se déplaçant dans certaines limites librement dans la cavité (7) et/ou sont reçus et fixés directement au niveau d'un élément de support essentiellement rigide, fixé à la jante (2), qui est formé par une pièce de montage disposée fixement sur la jante (2), telle qu'une soupape (11), un capteur de pression de pneu, ou autre.

2. Agencement selon la revendication 1, **caractérisé en ce que** l'élément de support flexible est formé par une bande de support annulaire (9) placée autour de la jante (2).

3. Agencement selon la revendication 2, **caractérisé en ce que** la bande de support annulaire (9) présente un diamètre inférieur au diamètre des rebords de jante (4) de la jante (2).

4. Agencement selon la revendication 1, **caractérisé en ce que** l'élément de support flexible est formé par une bande de support (9) s'appuyant à une extrémité directement ou indirectement contre la jante et étant librement mobile à l'autre extrémité.

5. Agencement selon l'une quelconque des revendications 1 à 4, **caractérisé en ce que** des fils, des fibres (8) et/ou un ou plusieurs éléments de support flexibles sous forme de bandes de support (9), supportés à une extrémité, librement mobiles à l'autre extrémité et garnis de fils et/ou de fibres (8), sont fixés par le biais d'un élément de retenue essentiellement rigide (12) s'étendant dans la cavité (7) de la roue de véhicule (1) contre l'élément de support essentiellement rigide connecté fixement à la jante (2) ou sont fixés par l'élément de support à la jante (2).

6. Agencement selon l'une quelconque des revendications 2 à 5, **caractérisé en ce que** l'élément de support sous forme de la bande de support (9) est réalisé certes de manière flexible mais résistant à l'étirement.

7. Agencement selon l'une quelconque des revendications 2 à 6, **caractérisé en ce que** la bande de support (9) formant l'élément de support est réalisée sous forme de bande de tissu.

8. Agencement selon l'une quelconque des revendications 1 à 8, **caractérisé en ce que** les fils et/ou les fibres (8) sont formés par des fibres synthétiques et/ou naturelles.

9. Agencement selon l'une quelconque des revendications 2 à 8, **caractérisé en ce que** la bande de support annulaire (9) servant d'élément de support présente une partie élastique (21) et une partie résistant à l'étirement (22).

10. Agencement selon la revendication 9, **caractérisé en ce que** la partie élastique (21) et la partie résistant à l'étirement (22) de la bande de support (9) sont disposées en sandwich l'une au-dessus de l'autre.

11. Agencement selon la revendication 9 ou 10, **caractérisé en ce que** la bande de support (9) présente une partie élastique (21) formée par des premiers fils et/ou fibres et une partie résistant à l'étirement (22) formée par des deuxièmes fils et/ou fibres.

12. Agencement selon la revendication 11, **caractérisé en ce que** les premiers fils et/ou fibres de la partie élastique (21) et les deuxièmes fils et/ou fibres de la partie résistant à l'étirement (22) de la bande de support (9) sont tissés ensemble.

13. Agencement selon la revendication 9 ou 10, **caractérisé en ce que** la partie élastique (21) de la bande de support (9) est réalisée par une couche élastique.
